# EUROPEAN PATENT SPECIFICATION

(11) **EP 2 665 590 B1**
(45) Date of publication and mention of the grant of the patent: **14.03.2018**
(21) Application number: 12700411.7
(22) Date of filing: 20.01.2012
(51) Int. Cl.: B29B 13/02

(54) **HEATING DEVICE**
HEIZVORRICHTUNG
DISPOSITIF DE CHAUFFAGE

(30) Priority: 21.01.2011 EP 11151638
(43) Date of publication of application: 27.11.2013
(73) Proprietor: Teijin Aramid B.V., 6824 BM Arnhem (NL)
(72) Inventor: VAN DE HEE, Henk, NL-6716 JC Ede (NL)
(74) Representative: Heimann, Anette
(86) International application number: PCT/EP2012/050821
(87) International publication number: WO 2012/098210

(56) References cited:
- GB-A- 621 783
- US-A- 2 365 998
- US-A- 4 541 889
- US-B1- 6 297 478

## Description

The invention pertains to a heating device for a sheet according to claim 1 and to the use of said heating device according to claim 12. Heating devices are known in the related art. In document EP 0 131 879 for example a double belt press for the laminate production with hotplates is disclosed. The hotplate is arranged between two pairs of rolls for heating material. In document US 5,063,010 a board making method using a pre-heater is disclosed. In figure 2 of document US 5,063,010 it is disclosed, that the preheating unit encompasses apex shaped plates.

US 4,541,889 discloses a heating device according to the preamble of claim 1. GB 621 783 describes a heating means to heat insulating materials like Bakelite before processing them further by a press tool. The device consists of two elongated heating elements, in parallel orientation, and guides.
US 2,356,998 discloses a method and an apparatus for heating sheet material, like synthetic resin varnished paper, before punching said material. The heating device consists of two parallel heating elements and two spacing and guiding guides.
US 6,297,478 discloses a heating unit consisting of a pair of heating bodies and guides with grooves. The heating unit is shiftable.

The devices of the above-mentioned documents have the function to heat up a part of the material. The heating devices do not provide further functions. Unfortunately, material can slip inside the heating devices and leaves the heating devices with random displacement. Successive devices must be designed in a special manner to compensate these variations.

Aim of the invention is therefore to create a heating device, which prevents the material from slipping inside the heating device.

A heating device with the features of claim 1 solves the aim. Due to the use of at least two guiding elements, material (for example a sheet) can be guided between the heating surfaces. Therefore, the sheet does not slip inside the heating device and leaves the heating device at a fixed part of the heating device. Adjacent devices - like calander rolls - can easily receive the sheet without adaptation. Since, slipping of the sheet inside the heating device is avoided, all parts of the sheet will be heated inside the heating device. It does not happen, that parts of a sheet slip outside the heating device (whereby these parts are then not heated up).

In the sense of this idea the term sheet comprises tapes, films and other material, which width is larger than its thickness.

The first and/or the second heating surface have an apex form on at least one end of the heating surface. Due to the apex form, the heating device can be arranged very close to the next device. This means the distance between the heating device and the subsequent device, whereby in this distance the sheet is not guided and not heated, is advantageously small. Undesired heat dissipation or slipping can be avoided.

Preferably, at least one guiding elements entirely ranges over at least one dimension of the first and/or second heating surface. A guiding element ranges entirely over at least one dimension, if the guiding element ranges over the entire length of at least one of the heating surfaces or over the entire width of at least one of the heating surfaces. It is preferred that both guiding elements range over the entire length of both heating surfaces (which have preferably the same length).

Preferably, the first heating surface and the second heating surface are plain heating surfaces. Preferably, at least one heating surface is a plain surface. "Plain" means that the heating surface has at least one area without bend. Preferably, the surfaces (or area) of the first and/or the second heating surfaces with contact to the sheet have no bend and have a plain surface. If the sheet overlies on the first heating surface the area with contact to the sheet is preferably flat or plain. In addition to this, preferably the surface of the second heating surface, which faces the sheet, is flat.

In a preferred embodiment at least one guiding element is heatable. Preferably, the at least one heatable guiding element is heatable together with the first and/or second surface. "Heatable together" means for example, that the first and/or the second heating surface heat up the guiding element. Preferably, the at least one heatable guiding element has approximately the same temperature than at least one of the heating surfaces. It is also preferred, that the two guiding elements are heatable. It is further preferred, that the first heating surface, the second heating surface and also both guiding elements have approximately the same temperature. Due to this, a sheet is homogenously heated up and no temperature difference in different parts of the sheet occurs.

Preferably, the temperature difference in different parts of the heating surface is smaller than 0.5 to 6 °C, more preferred smaller than 3 to 5 °C and most preferred smaller than 1°C over the width of the heating surface. It is also preferred that the temperature difference in different parts of the heating surface is smaller than 0.5 to 6 °C, more preferred smaller than 3 to 5 °C and most preferred smaller than 1°C over the length of the heating surface. "Different parts of the heating surfaces" means that the surface (preferably the flat surface) can be separated into different parts. For example apex formed part, front or back part. Due to an approximately equal temperature distribution over the entire heating surface of the first heating surface and/or the second heating surface, the sheet is homogenously heated up via the heating device.

It is further preferred that the temperature difference between the first heating surface and the second heating surface is smaller than 0.5 to 6°C, more preferred smaller than 3 to 5 °C and most preferred smaller than 1°C. If the first heating surface and the second heating surface have not different heating parts, the temperature of the first heating surface and the temperature of the second heating surface are in average equal). If the first heating surface exhibits different heating parts and also the second heating surface exhibits different heating parts, the difference in corresponding heating parts is preferably smaller than 0.5 to 6 °C, more preferred smaller than 3 to 5 °C and most preferred smaller than 1°C. Corresponding heating parts are parts arranged on top of each other.

Preferably, inside the heating device only atmospheric pressure, gravity force and tensile force act on the sheet. Preferably, no further pressure is applied on the sheet inside the heating device. Due to the guiding elements and a preferred flat form of the first and second heating surface the sheet is prevented form warping inside the heating device. Advantageously, no further pressure is therefore applied to the sheet to suppress this.
A further object of the present invention is a manufacturing device for manufacturing sheets, whereby the manufacturing device comprises an above-described heating device.
Preferably, the manufacturing device comprises (among other devices) a pair of calander rolls and the heating surfaces of the heating device are arranged with the apex form facing the calander rolls. Due to the partial apex form of the heating surfaces and the arrangement of the heating surfaces regarding the calander rolls, the sheet can be heated and guided by the heating device until the sheet enters the calander rolls. Advantageously, long distance without heating and without guiding can be avoided and the sheet retains the temperature as well as the arrangement regarding the calander rolls.
Preferably, the distance between the end of the apex form and the gap of the calander rolls is at most 40% of the diameter of the calandar rolls, more preferably 30% of the diameter of the calander rolls even more preferably 10% and most preferably 2% of the diameter of the calander rolls.
The invention is further elucidated by example and figures, which are given below.
- Figure 1: shows schematically a heating device with apex form and an explosion view of a part of the heating device.
- Figure 2: shows schematically a side view of a heating device with calander rolls and sheet.
- Figure 3: shows schematically an example for the heating device.

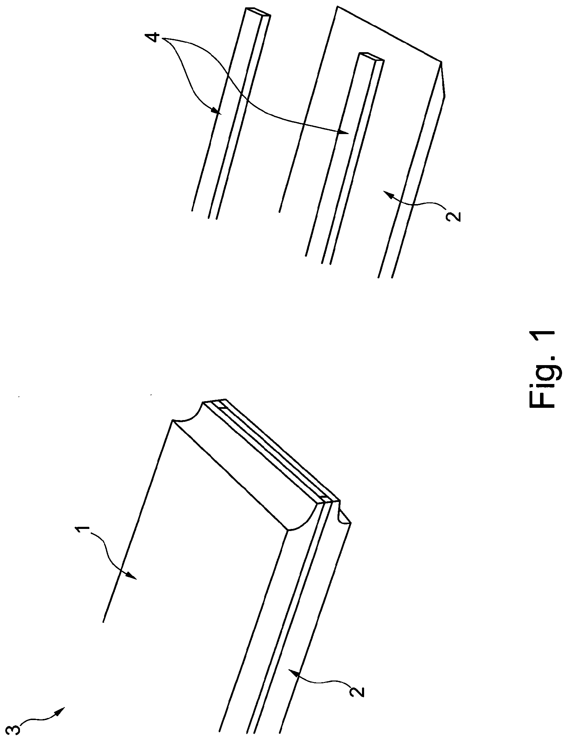

Figure 1 shows schematically a heating device 3 with a first heating surface 1 and a second heating surface 2. The first heating surface 1 is arranged on the top of the second heating surface 2 and both heating surfaces 1, 2 have an apex form on at least one end of the surfaces 1, 2. Also in figure 1 an explosion view of a part of the heating device 3 (second heating surface 2 and guiding elements 4) is shown. In this detailed illustration two guiding elements 4 are shown. The guiding elements 4 are arranged between the heating surfaces 1, 2. Preferably, at east one of the two guiding elements 4 exhibits approximately the same length as one of the heating surfaces 1, 2. In the embodiment of figure 1 both guiding elements 4 have the same length as the first and the second heating surfaces 1, 2. The first and second heating surfaces 1, 2 are heatable and also heat up the guiding elements 4. Therefore, the heating surfaces 1, 2 and also the guiding elements 4 exhibit approximately the same temperature. It is also possible, that the guiding elements 4 have an independent heating source, whereby the temperature of the guiding elements 4 and the heating surfaces 1, 2 may be equal or different in respect to each other. In the embodiment shown in figure 1, first heating surface 1, second heating surface 2 and each guiding element 4 are separate components of the heating device 3. It is also possible, that the first heating surface 1, the second heating surface 2 and the guiding elements 4 build up a one-piece heating device 3. Further, it is also possible, that one of the heating surfaces 1, 2 and one of the guiding elements 4 are one-pieced. Due to the guiding elements 4 and the heating surfaces 1, 2 a tunnel is formed. Inside this tunnel a sheet 6 (not shown in figure 1) is guided and also heated up. The created tunnel has a width, which is just a little bit greater than the width of the sheet. For different sheet widths the tunnel can be adjusted via the guiding elements 4. In one example different guiding elements 4 (and heating surfaces in case of a one-pieced guiding element and heating surface) with different widths can be used for the heating device 3. In another embodiment the guiding elements 4 are movably arranged inside the heating devices 3. If a tunnel with greater width is necessary the guiding elements 4 will be protruded over the heating surfaces 1, 2 and in case of a smaller tunnel the guiding elements 4 will be arranged more inside the heating device 3 and with a greater distance to a side face of the heating surfaces 1, 2. The first heating surface 1 and the second heating surface 2 have (in the embodiment shown in figure 1) both a flat heating surface and an apex form on one end of the heating surface. The apex form occurs by reduction of the thickness of the heating surface itself and does not influence the flat form of the heating surface.

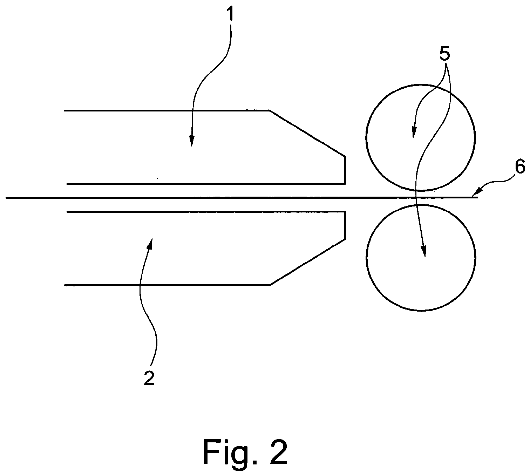

In figure 2 the heating device 3 in combination with a pair calander rolls 5 is shown. Due to the apex form of the first and second heating surfaces 1, 2 the distance between the heating device 2 and the calander rolls 5 is small. A sheet 6 can be guided and heated and enters the calander rolls just after leaving the heating device 3. Due to this, the sheet 6 enters the calander rolls 5 in a defined position or arrangement regarding the calander rolls 5 and with defined temperature. A temperature reduction due to a long distance between heating device 3 and calander rolls 5 (which depends on ambient temperature) is avoided. Therefore, the process is repeatable with high accuracy. Additionally to this, the sheet enters the calander rolls always at the same position- this means the sheet passes always the same pressing points of the calender. Different pressure variations of the calander are therefore compensated. A stable position of the sheet inside the calander improves the stability of the roll gap, which reduces sheet thickness variations and improves the straightness of the rolled sheet.

The invention is further elucidated by one example, which is given below.

### Example 1

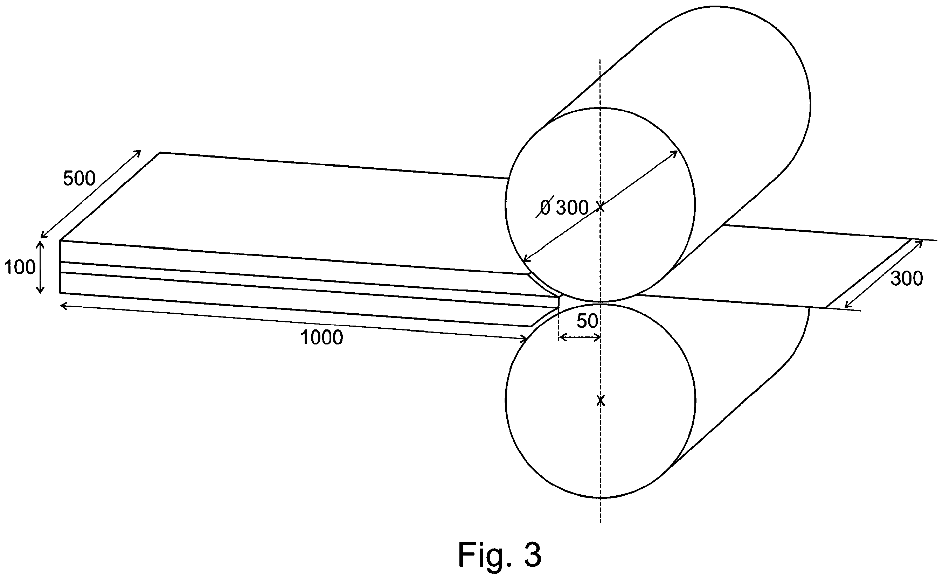

The heating device has a first and a second heating surface, whereby each heating surface has a length of 1000 mm and a width of 500 mm. The first heating surface is arranged on top of the second heating surface and both together (including a gap between the first and the second surface) have a height of 100 mm. The heating surfaces are heatable in a temperature range of 100 - 150 °C, preferably in a range of 130 - 140 °C. On one end of the first and the second heating surfaces the surfaces are apex shaped, whereby both apex shaped ends of the first and the second surface are faced to a pair of calander rolls. The calander rolls have a diameter of 300mm and the end of the apex form has a distance of 50 mm in respect to a line, which runs vertical trough the center of both calander rolls. Between the first and the second heating surface two guiding elements are arranged. These guiding elements have also a length of 1000 mm and an apex form faced to the calander rolls. First heating surface, second heating surface and guiding elements form a channel, whereby all parts of the channel are heatable. A sheet is guided inside the channel and has a width of 300 mm. The heating device is schematically shown in Figure 3. The sheet is guided inside the channel in such a way, that no horizontal offset of the sheet occurs. This means during a manufacturing process the sheet leaves the heating device at all times at the same position.

### Reference numbers

- 1: first heating surface
- 2: second heating surface
- 3: heating device
- 4: guiding elements
- 5: calander rolls
- 6: sheet

## Claims

1. Heating device (3) for sheet (6), comprising at least a first heating surface (1) and a second heating surface (2), whereby the first and the second heating surfaces (1, 2) are arranged such, that the first and the second heating surfaces (1, 2) are on the top of each other, whereby the first and/or the second heating surface (1, 2) has or have at least one end in apex form **characterized in that** at least two guiding elements (4) are arranged between the first and the second heating surfaces (1, 2).

2. Heating device (3) according to claim 1, whereby at least one guiding element (4) ranges entirely over at least one dimension of the first and/or second heating surface (1, 2).

3. Heating device (3) according to claim 1 or 2, whereby the first heating surface (1) and/or the second heating surface (2) has a flat surface.

4. Heating device (3) according to at least one of the foregoing claims, whereby at least one guiding element (4) is heatable.

5. Heating device (3) according to at least one of the foregoing claims, whereby different parts of the first heating surface (1) have a temperature difference that is smaller than 0.5 to 6°C, more preferred smaller than 3 to 5°C and most preferred smaller than 1°C over the width of the heating surface (1).

6. Heating device (3) according to at least one of the foregoing claims, whereby different parts of the first heating surface (1) have a temperature difference that is smaller than 0.5 to 6°C, more preferred smaller than 3 to 5°C and most preferred smaller than 1°C over the length of the heating surface (1).

7. Heating device (3) according to at least one of the foregoing claims, whereby different parts of the second heating surface (2) have a temperature difference that is smaller than 0.5 to 6°C, more preferred smaller than 3 to 5°C and most preferred smaller than 1°C.

8. Heating device (3) according to at least one of the foregoing claims, whereby a temperature difference between the first heating surface (1) and the second heating surface (2) is smaller than 0.5 to 6°C, more preferred smaller than 3 to 5°C and most preferred smaller than 1°C.

9. Heating device (3) according to at least one of the foregoing claims, whereby only atmospheric pressure, gravity force and tensile forces act on the sheet (6) inside the heating device (3).

10. Manufacturing device for a sheet, comprising a heating device (3) according to claim 1, whereby the manufacturing device comprises a pair of calandar rolls (5) and the first and/or second heating surfaces (1, 2) are arranged with the apex form facing the calender rolls (5).

11. Manufacturing device according to claim 10, whereby the distance between the end of the apex form and the calander rolls (5) is 2 to 10% of the diameter of the calender rolls..

12. Use of a heating device according to at least one of the claims 1 to 9, for sheets.

## Patentansprüche

1. Heizvorrichtung (3) für eine Bahn (6), umfassend mindestens eine erste Heizfläche (1) und eine zweite Heizfläche (2), wobei die erste und die zweite Heizfläche (1, 2) so angeordnet sind, dass die erste und zweite Heizfläche (1, 2) übereinander sind , wobei die erste und/oder die zweite Heizfläche (1, 2) mindestens ein in Spitzenform ausgebildetes Ende aufweist, **dadurch gekennzeichnet, dass** mindestens zwei Führungselemente (4) zwischen der ersten und der zweiten Heizfläche (1, 2) angeordnet sind.

2. Heizvorrichtung (3) nach Anspruch 1, wobei mindestens ein Führungselement (4) sich vollständig über mindestens eine Abmessung der ersten und/oder zweiten Heizfläche (1, 2) erstreckt.

3. Heizvorrichtung (3) nach Anspruch 1 oder 2, wobei die erste Heizfläche (1) und/oder die zweite Heizfläche (2) eine flache Oberfläche aufweist.

4. Heizvorrichtung (3) nach mindestens einem der vorhergehenden Ansprüche, wobei mindestens ein Führungselement (4) beheizbar ist.

5. Heizvorrichtung (3) nach mindestens einem der vorhergehenden Ansprüche, wobei verschiedene Teile der ersten Heizfläche (1) eine Temperaturdifferenz aufweisen, die über die Breite der Heizfläche (1) kleiner als 0,5 bis 6 °C, bevorzugter kleiner als 3 bis 5 °C und besonders bevorzugt kleiner als 1 °C ist.

6. Heizvorrichtung (3) nach mindestens einem der vorhergehenden Ansprüche, wobei verschiedene Teile der ersten Heizfläche (1) eine Temperaturdifferenz aufweisen, die über die Länge der Heizfläche (1) kleiner als 0,5 bis 6 °C, bevorzugter kleiner als 3 bis 5 °C und besonders bevorzugt kleiner als 1 °C ist.

7. Heizvorrichtung (3) nach mindestens einem der vorhergehenden Ansprüche, wobei verschiedene Teile der zweiten Heizfläche (2) eine Temperaturdifferenz aufweisen, die kleiner als 0,5 bis 6 °C, bevorzugter kleiner als 3 bis 5 °C und besonders bevorzugt kleiner als 1 °C ist.

8. Heizvorrichtung (3) nach mindestens einem der vorhergehenden Ansprüche, wobei eine Temperaturdifferenz zwischen der ersten Heizfläche (1) und der zweiten Heizfläche (2) kleiner als 0,5 bis 6 °C, bevorzugter kleiner als 3 bis 5 °C und besonders bevorzugt kleiner als 1 °C ist.

9. Heizvorrichtung (3) nach mindestens einem der vorhergehenden Ansprüche, wobei nur atmosphärischer Druck, Gravitationskraft und Zugkräfte auf die Bahn (6) im Inneren der Heizvorrichtung (3) einwirken.

10. Herstellungsvorrichtung für eine Bahn, umfassend eine Heizvorrichtung (3) nach Anspruch 1, wobei die Herstellungsvorrichtung ein Paar Kalanderwalzen (5) umfasst und die erste und/oder zweite Heizfläche (1, 2) so angeordnet sind, dass die Spitzenform den Kalanderwalzen zugewandt ist (5).

11. Herstellungsvorrichtung nach Anspruch 10, wobei der Abstand zwischen dem Ende der Spitzenform und den Kalanderwalzen (5) 2 bis 10 % des Durchmessers der Kalanderwalzen beträgt.

12. Verwendung einer Heizvorrichtung nach mindestens einem der Ansprüche 1 bis 9 für Bahnen.

## Revendications

1. Dispositif de chauffage (3) pour feuille (6), comprenant au moins une première surface chauffante (1) et une deuxième surface chauffante (2), dans lequel les première et deuxième surfaces chauffantes (1, 2) sont agencées de telle manière que les première et deuxième surfaces chauffantes (1, 2) sont disposées l'une sur l'autre, et dans lequel la première et/ou la deuxième surface chauffante (1, 2) a ou ont au moins une extrémité en forme de sommet, **caractérisé en ce qu'**au moins deux éléments de guidage (4) sont placés entre les première et deuxième surfaces chauffantes (1, 2).

2. Dispositif de chauffage (3) selon la revendication 1, dans lequel au moins un élément de guidage (4) couvre entièrement au moins une dimension de la première et/ou la deuxième surface chauffante (1, 2).

3. Dispositif de chauffage (3) selon la revendication 1 ou 2, dans lequel la première surface chauffante (1) et/ou la deuxième surface chauffante (2) a une surface plate.

4. Dispositif de chauffage (3) selon au moins l'une des revendications qui précèdent, dans lequel au moins un élément de guidage (4) peut être chauffé.

5. Dispositif de chauffage (3) selon au moins l'une des revendications qui précèdent, dans lequel les différentes parties de la première surface chauffante (1) ont une différence de température qui est inférieure à 0,5 à 6 °C, de préférence inférieure à 3 à 5 °C et mieux encore inférieure à 1 °C sur la largeur de la surface chauffante (1).

6. Dispositif de chauffage (3) selon au moins l'une des revendications qui précèdent, dans lequel les différentes parties de la première surface chauffante (1) ont une différence de température qui est inférieure à 0,5 à 6 °C, de préférence inférieure à 3 à 5 °C et mieux encore inférieure à 1 °C sur la longueur de la surface chauffante (1).

7. Dispositif de chauffage (3) selon au moins l'une des revendications qui précèdent, dans lequel les différentes parties de la deuxième surface chauffante (2) ont une différence de température qui est inférieure à 0,5 à 6 °C, de préférence inférieure à 3 à 5 °C et mieux encore inférieure à 1 °C.

8. Dispositif de chauffage (3) selon au moins l'une des revendications qui précèdent, dans lequel une différence de température entre la première surface chauffante (1) et la deuxième surface chauffante (2) est inférieure à 0,5 à 6 °C, de préférence inférieure à 3 à 5 °C et mieux encore inférieure à 1 °C.

9. Dispositif de chauffage (3) selon au moins l'une des revendications qui précèdent, dans lequel seules la pression atmosphérique, la force de gravitation et les forces de traction agissent sur la feuille (6) présente à l'intérieur du dispositif de chauffage (3).

10. Dispositif de fabrication pour une feuille, comprenant un dispositif de chauffage (3) selon la revendication 1, dans lequel le dispositif de fabrication comprend une paire de cylindres à calandrer (5) et les première et/ou deuxième surfaces chauffantes (1, 2) sont disposées avec la forme de sommet en face des cylindres à calandrer (5).

11. Dispositif de fabrication selon la revendication 10, dans lequel la distance qui sépare l'extrémité de la forme de sommet des cylindres à calandrer (5) vaut de 2 à 10 % du diamètre des cylindres à calandrer.

12. Utilisation d'un dispositif de chauffage selon au moins l'une des revendications 1 à 9, pour des feuilles.
